# EUROPÄISCHE PATENTSCHRIFT

(11) **EP 3 707 107 B1**
(45) Veröffentlichungstag und Bekanntmachung des Hinweises auf die Patenterteilung: **16.06.2021**
(21) Anmeldenummer: 18702162.1
(22) Anmeldetag: 19.01.2018
(51) Int. Cl.: C04B 24/42, C04B 28/04, C08G 77/18, C08G 77/24, C09D 183/04, C04B 103/65

(54) **ALKYLSILICONHARZ ALS ADDITIV ZUR HYDROPHOBIERUNG VON FASERZEMENT**
ALKYL SILICONE RESIN AS ADDITIVE FOR HYDROPHOBISING FIBRE CEMENT
RÉSINE ALKYL SILICONE EN TANT QU'ADDITIF POUR L'HYDROPHOBISATION DE FIBROCIMENT

(43) Veröffentlichungstag der Anmeldung: 16.09.2020
(73) Patentinhaber: Wacker Chemie AG, 81737 München (DE)
(72) Erfinder: DÖRRICH, Steffen, 81827 München (DE); LÖSSEL, Georg, 84547 Emmerting (DE); MARANI, Pedro, 05351-080 Sao Paulo (BR); SCHILDBACH, Daniel, 97264 Helmstadt (DE); STANJEK, Volker, 84539 Ampfing (DE)
(74) Vertreter: Fritz, Helmut
(86) Internationale Anmeldenummer: PCT/EP2018/051358
(87) Internationale Veröffentlichungsnummer: WO 2019/141377

(56) Entgegenhaltungen:
- EP-A2- 1 205 505
- DE-A1- 4 114 498
- DE-A1-102011 005 581

## Beschreibung

Die Erfindung betrifft ein Alkylsiliconharz (A), ein kontinuierliches Verfahren zur Herstellung von Alkylsiliconharz (A), ein kontinuierliches Verfahren zur Massenhydrophobierung von Faserzement mit Alkylsiliconharz (A) sowie die Verwendung von Alkylsiliconharz (A) zur Massenhydrophobierung von Faserzement.

Siliciumorganische Verbindungen werden im Bautenschutz seit langem wegen ihrer hervorragenden Imprägnierwirkung gegen Wasser und Schmutz, ihrer Umweltverträglichkeit und ihrer physiologischen Unbedenklichkeit eingesetzt.

Die gängigen Imprägniermittel enthalten dabei Alkoxysilane mit einer hydrophoben Alkylgruppe, wobei Alkylgruppen mit 8 Kohlenstoffatomen, insbesondere n-Octylgruppen oder 1,4,4-Trimethylpentylgruppen, besonders gängig sind. Typische Vertreter derartiger hydrophobierend wirkender Silane sind das n-Octyl-triethoxysilan sowie das 1,4,4-Trimethylpentyl-triethoxysilan.

Die meisten kommerziell erhältlichen Mittel zur Hydrophobierung von Baumaterialien enthalten neben den o.g. Silanen weitere siliciumorganische Verbindungen, insbesondere Methylsiliconharze, lineare Polydimethylsiloxane oder auch z.B. mit Aminogruppen modifizierte lineare Polydimethylsiloxane. Die entsprechenden Mischungen können dabei in Substanz, als Lösung in einem organischen Lösungsmittel oder auch als wässrige Emulsion appliziert werden.

Grundsätzlich kann man dabei zwischen zwei Applikationsformen unterscheiden. Bei der ersten wird ein bereits bestehendes Bauwerk, z.B. eine Betonbrücke, eine Hausfassade oder ein Dachziegel nachträglich mit einer Beschichtungsformulierung hydrophobiert. Dabei kann das aufgetragene Beschichtungsmaterial zumindest bei porösen Baumaterialien auch in den Untergrund eindringen und somit zumindest eine gewisse Tiefenwirkung entfalten. Im Gegensatz zu ausschließlich oberflächlich aufgetragenen Farben oder Lacken, führen kleinere oberflächliche Beschädigungen somit nicht zwangsläufig zu einem Verlust der hydrophoben Schutzwirkung. Größere Beschädigungen jedoch oder auch Bohrlöcher, Schnitt-, Säge oder Bruchkanten führen jedoch bei ausschließlich oberflächlich imprägnierten Materialien an den betroffenen Stellen zu einem Verlust der Schutzwirkung.

Während bei bereits existierenden Bauwerken eine nachträgliche oberflächliche Hydrophobierung meist die einzige praktikable Imprägniermethode darstellt, kann das Hydrophobiermittel bei der Herstellung von Bauteilen auf Basis hydraulischer Bindemittel, wie z.B. Beton oder Faserzement, bereits vor dem Abbindeprozess zugegeben werden. Diese sogenannte Massehydrophobierung hat den Vorteil, dass auf diese Weise das gesamte Volumen des Bauteils und nicht nur dessen Oberfläche mit einem wasserabweisenden Schutz versehen wird. Die Schutzwirkung geht somit nicht verloren, wenn das Bauteil beschädigt oder auch gezielt zersägt oder mit Bohrlöchern versehen wird. Zudem wird durch die Massehydrophobierung der zusätzliche Arbeitsschritt einer nachträglichen Beschichtung des ausgehärteten Bauteils eingespart.

Eine besondere Bedeutung unter den zu hydrophobierenden Bauelementen nehmen faserverstärkte Zementverbundwerkstoffe ein.

Zu deren Herstellung wird in der Regel ein stark verdünnter Schlamm aus Fasern und Zement, meist gewöhnlicher Portlandzement, zunächst zu Filmen von etwa 0,3 mm Dicke entwässert und anschließend bis zu der jeweils gewünschten Dicke auf eine Rolle gewickelt. Danach wird die aufgerollte Faserzementschicht aufgeschnitten und zu einer ebenen Platte abgeflacht, die dann in die jeweils gewünschte Form und Größe geschnitten werden kann. Die Aushärtung kann über mehrere Tage (typischerweise 1-2 Wochen) an der Luft oder auch deutlich schneller bei erhöhten Temperaturen durch sogenanntes Autoklavieren erfolgen. Bei dem letztgenannten Verfahren können dem Faserzement auch 40-60% Sand zugesetzt werden, der bei den erhöhten Autoklaventemperaturen mit dem Überschuss an Kalk im Zement unter Bildung von Calcium-Siliciumdioxid-Hydraten reagiert.

Als Fasern werden vor allem Asbest-, Cellulose-, Polyvinylacetat- (PVA-), Polyvinylalkohol- (PVOH-) oder Polypropylen-(PP-)Fasern verwendet. Aber auch Kohlenstoff- und Polyacrylnitrilfasern können verwendet werden. Hinsichtlich ihrer Eigenschaften weisen insbesondere Asbestfasern mehrere Vorteile auf, da sie nicht nur stark und steif sind, sondern sich als anorganische Materialien auch stark mit der Zementmatrix verbinden können. Anders als z.B. Cellulosefasern können Asbestfasern auch nicht verrotten.

Auf Grund der von Asbest ausgehenden Gesundheitsgefährdung ist dieses Fasermaterial jedoch insbesondere in den westlichen Industriestaaten auf dem Rückzug, in Europa und Nordamerika sind die entsprechenden Produkte bereits vollständig verschwunden. Trotzdem enthalten weltweit noch mehr als 50% der Faserzementplatten Asbestfasern.

Als gesundheitlich unbedenkliche Alternativen werden bei nicht autoklavierten Zementfaserplatten meist Kombinationen aus Cellulose-Fasern mit PVA-, PVOH-, PP- oder PET-Fasern verwendet. Da PVA-, PP und auch PET durch den Autoklavierschritt zerstört werden, wird bei diesem Verfahren in der Regel ausschließlich Cellulose als Alternative zum Asbest eingesetzt. Da Faserzementplatten ohne PVA, PP, PET und Asbest jedoch nur mäßige mechanische Eigenschaften besitzen, werden autoklavierte Produkte in Europa und Amerika vornehmlich zur Verkleidung von Fassaden eingesetzt, während für konstruktiv tragende Wand- oder Dachelemente meist nicht autoklavierte Produkte verwendet werden.

Insbesondere für Anwendungen im Außenbereich kommen in zunehmendem Maße hydrophobierte Faserzementplatten zum Einsatz, wobei sich auf Grund der oben beschriebenen Vorteile ein Trend weg von der nachträglichen Beschichtung hin zur Massehydrophobierung zeigt.

Dabei ist die Massehydrophobierung von Faserzementbauteilen mit Formulierungen, die neben anderen Bestandteilen auch Alkoxysilane mit einer hydrophoben Alkylgruppe enthalten, seit langem bekannt und wurde bereits im Jahr 1991 in DE 4114498 beschrieben.

Nachteilig am Einsatz von Alkoxysilanen ist jedoch unter anderem die große Alkoholmenge, die während der Anwendung der Silane durch die Hydrolyse von deren Alkoxysilylgruppen freigesetzt wird. Im Falle der oben erwähnten Alkyltriethoxysilane, deren Alkylgruppe 8 Kohlenstoffatome enthalten, entspricht die Gewichtsmenge an freigesetztem Ethanol nahezu exakt 50% der eingesetzten Silanmenge.

Dies stellt insbesondere bei der Massehydrophobierung von Faserzement ein großes Problem dar, da dort, wie beschrieben, ein stark verdünnter Schlamm aus Fasern und Zement entwässert wird. Um übergroße Abwassermengen zu vermeiden, wird das bei der Entwässerung abgetrennte Prozesswasser in der Regel in den Prozess zurückgeführt. Wird dabei ein Silan zur Massehydrophobierung eingesetzt, verbleibt der freigesetzte, gut wasserlösliche Alkohol im Prozesswasser und reichert sich somit mit jedem Zyklus des in den Prozess zurückgeführten Wassers immer weiter an und würde sich nur durch technisch sehr aufwändige und in der Realität aus Kostengründen kaum praktikable Verfahren wieder entfernen lassen.

Zudem wurde gefunden, dass monomere Alkylalkoxysilane bei einem Einsatz zur Massenhydrophobierung nur eine mäßig gute Wirkung aufweisen.

Als Verbesserung wurde in WO 2006/016876 vorgeschlagen, anstelle von Alkylalkoxysilanen die aus diesen durch Hydrolyse herstellbaren Alkylsilanole einzusetzen. Diese Vorgehensweise weist jedoch den Nachteil auf, dass Silanole nur in sehr hoher Verdünnung lagerstabil und somit auch transportfähig sind. Ein Transport in sehr hoher Verdünnung ist wirtschaftlich jedoch uninteressant, und eine Herstellung von Silanollösungen vor Ort beim Produzenten von Faserzementplatten ist auf Grund fehlender Anlagen zur Durchführung dieses chemischen Prozessschrittes meist nicht möglich

EP1205505 A2 betrifft ein Verfahren zur kontinuierlichen Herstellung eines Gemischs von Organoalkoxysiloxanen, ausgehend von (i) einem Organotrichlorsilan oder einem Gemisch von Organotrichlorsilanen oder einem Gemisch aus mindestens einem Organotrichlorsilan und Tetrachlorsilan, (ii) Wasser und (iii) Alkohol.

Aufgabe der Erfindung war daher die Bereitstellung eines Produktes zur Massehydrophobierung von Faserzement, das die Nachteile der im Stand der Technik beschriebenen Materialien nicht mehr oder zumindest nur noch in einem erheblich verminderten Ausmaß aufweist.

Gegenstand der Erfindung ist ein Alkylsiliconharz (A) enthaltend mindestens 80 Gew.-% Einheiten der allgemeinen Formel I

R¹ₐ(R²O)_{b}R³_{c}SiO_{(4-a-b-c)/2} (I),

wobei
- R¹: gleich oder verschieden sein kann und einen einwertigen, SiC-gebundenen, unsubstituierten oder substituierten aliphatischen Kohlenwasserstoffrest mit maximal 4 Kohlenstoffatomen bedeutet,
- R²: gleich oder verschieden sein kann und einen einwertigen, unsubstituierten oder substituierten Kohlenwasserstoffrest mit maximal 4 Kohlenstoffatomen bedeutet,
- R³: gleich oder verschieden sein kann und einen einwertigen, SiC-gebundenen, unsubstituierten oder substituierten Kohlenwasserstoffrest mit mindestens 5 Kohlenstoffatomen bedeutet,
- a: 0, 1, 2 oder 3 ist, bevorzugt 0 oder 1,
- b: 0, 1, 2 oder 3, bevorzugt 0, 1 oder 2, ist und
- c: 0, 1 oder 2, bevorzugt 0 oder 1, ist, mit der Maßgabe, dass die Summe aus a+b+c kleiner oder gleich 3 ist und in mindestens 50 % der Einheiten der Formel (I) die Summe a+b gleich 0 oder 1 und in mindestens 20% der Einheiten der allgemeinen Formel (I) c gleich 1 ist,
wobei der Gehalt an Alkoxygruppen R²O 5-20 Gew.-% beträgt.

Der Erfindung liegt die überraschende Entdeckung zugrunde, dass die erfindungsgemäßen Alkylsiliconharze (A) trotz ihres hochmolekularen Charakters in der Lage sind, monomere Alkylalkoxysilane in der Anwendung zur Massenhydrophobierung von Faserzement nicht nur zu ersetzen, sondern dabei sogar noch eine verbesserte hydrophobierende Wirkung zu zeigen.

Gegenstand der Erfindung ist auch ein Verfahren zur Massenhydrophobierung von Faserzement, bei dem eine Mischung enthaltend Wasser, Fasern, Zement und Alkylsiliconharz (A) hergestellt wird.

Gegenstand der Erfindung ist auch die Verwendung von Alkylsiliconharz (A) zur Massenhydrophobierung von Faserzement.

Als Rest R¹ werden nicht substituierte Reste bevorzugt, d.h. die Alkylreste, wie der Methyl-, Ethyl-, n-Propyl-, iso-Propyl-, 1-n-Butyl-, 2-n-Butyl-, iso-Butyl-, tert.-Butyl-, wobei Methyl- und Ethylreste besonders und der Methylrest insbesondere bevorzugt werden.

Beispiele für Rest R² sind die für Rest R¹ angegebenen Bedeutungen. Bevorzugt handelt es sich bei Rest R² um gegebenenfalls mit Halogenatomen substituierte Alkylreste mit 1 bis 4 Kohlenstoffatomen, insbesondere um den Methyl- und Ethylrest.

Bevorzugt handelt es sich bei Rest R³ um nicht substituierte cyclische, verzweigte oder unverzweigte Alkylgruppen mit 6 bis 18 Kohlenstoffatomen. Beispiele für Reste R³ sind *n*-Hexyl, cyclo-Hexyl-, *n*-Octyl, 1,4,4-Trimethylpentyl-, Decyl-, Dodecyl-, Tetradecyl-, Hexadecyl-, oder Octadeclylreste.

Besonders bevorzugt handelt es sich bei den Resten R³ um Alkylgruppen mit 8 bis 16 Kohlenstoffatomen, insbesondere um *n-*Octyl-, 1,4,4-Trimethylpentyl- oder *n*-Hexadecylreste.

Die Alkylsiliconharze (A) enthaltend vorzugsweise mindestens 90 Gew.-% Einheiten der allgemeinen Formel (I). Besonders bevorzugt besteht Komponente (A) ausschließlich aus Einheiten der allgemeinen Formel (I).

Bei den Alkylsiliconharzen (A) bedeuten vorzugsweise mindestens 90 Mol-% aller Reste R¹ Methylrest. Bei den Alkylsiliconharzen (A) bedeuten vorzugsweise mindestens 90 Mol-% aller Reste R² Methyl-, Ethyl-, Propyl- oder Isopropylrest. Bei den Alkylsiliconharzen (A) bedeuten vorzugsweise mindestens 90 Mol-% aller Reste R³ nicht substituierte Alkylgruppen mit 8 bis 16 Kohlenstoffatomen.

Bevorzugt sind Alkylsiliconharze (A) eingesetzt, die mindestens 40%, besonders bevorzugt mindestens 60%, Einheiten der allgemeinen Formel (I) aufweisen, in denen **a** gleich 0 und **c** gleich 1 ist, jeweils bezogen auf die Gesamtzahl an Einheiten der allgemeinen Formel (I). In einer besonderen Ausführungsform der Erfindung können Alkylsiliconharze (A) eingesetzt werden, die ausschließlich Einheiten der Formel (I) aufweisen, in denen **a** gleich 0 und **c** gleich 1 ist.

In einer Ausführung der Erfindung werden Alkylsiliconharze (A) eingesetzt, die, jeweils bezogen auf die Gesamtzahl an Einheiten der allgemeinen Formel (I), höchstens 50%, besonders bevorzugt höchstens 40%, ganz besonders bevorzugt höchstens 20% Einheiten der allgemeinen Formel (I) aufweisen, in denen **a** für den Wert 2 steht.

Bevorzugt sind Alkylsiliconharze (A), die, jeweils bezogen auf die Gesamtzahl an Einheiten der allgemeinen Formel (I), 8 bis 65 %, insbesondere 10 bis 45 %, ganz besonders 12 bis 16 % Einheiten der allgemeinen Formel (I) aufweisen, in denen **b** für den Wert 0 steht.

Bevorzugt sind Alkylsiliconharze (A), die, jeweils bezogen auf die Gesamtzahl an Einheiten der allgemeinen Formel (I), 30 bis 70 %, insbesondere 45 bis 63 % Einheiten der allgemeinen Formel (I) aufweisen, in denen **b** für den Wert 1 steht.

Bevorzugt sind Alkylsiliconharze (A), die, jeweils bezogen auf die Gesamtzahl an Einheiten der allgemeinen Formel (I), 5 bis 45%, insbesondere 22 bis 40 Einheiten der allgemeinen Formel (I) aufweisen, in denen **b** für den Wert 2 steht.

Bevorzugt sind Alkylsiliconharze (A) die, jeweils bezogen auf die Gesamtzahl an Einheiten der allgemeinen Formel (I), 0 bis 5 %, besonders bevorzugt 0 bis 2 %, insbesondere 0 bis 1 % Einheiten der allgemeinen Formel (I) aufweisen, in denen **b** für den Wert 3 steht.

Vorzugsweise werden Alkylsiliconharze (A) eingesetzt, die, jeweils bezogen auf die Gesamtzahl an Einheiten der allgemeinen Formel (I), mindestens 80% Einheiten der Formel (I) aufweisen, in denen die Summe **a+c** gleich 1 ist.

Beispiele für die Alkylsiliconharze (A) sind Organopolysiloxanharze, die im Wesentlichen, vorzugsweise ausschließlich, aus (Q) -Einheiten der Formeln SiO_{4/2}, Si(OR⁴)O_{3/2}, Si(OR⁴)₂O_{2/2} und Si(OR⁴)₃O_{1/2}, (T) -Einheiten der Formeln Alk-SiO_{3/2}, Alk-Si(OR⁴)O_{2/2} und Alk-Si(OR⁴)₂O_{1/2}, Me-SiO_{3/2}, Me-Si(OR⁴)O_{2/2} und Me-Si(OR⁴)₂O_{1/2,} (D) -Einheiten der Formeln Me₂SiO_{2/2} und Me₂Si(OR⁴)O_{1/2} sowie (M) - Einheiten der Formel Me₃SiO_{1/2} bestehen, wobei Me für einen Methylrest, Alk für einen unsubstituierten Alkylrest mit 8 bis 16 Kohlenstoffatomen und R⁴ für Alkylreste mit 1 bis 4 Kohlenstoffatomen, steht, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für die Alkylsiliconharze (A)sind Organopolysiloxanharze, die im Wesentlichen, vorzugsweise ausschließlich, aus T-Einheiten der Formeln AlkSiO_{3/2}, AlkSi(OR⁴)O_{2/2} und AlkSi(OR⁴)₂O_{1/2} sowie T-Einheiten der Formeln MeSiO_{3/2}, Me-Si(OR⁴)O_{2/2} und MeSi(OR⁴)₂O_{1/2} sowie D-Einheiten der Formeln Me₂SiO_{2/2} und Me₂Si(OR⁴)O_{1/2} bestehen, wobei Me, Alk und R⁴ die oben genannte Bedeutung aufweisen, und die molaren Verhältnisse von (T)- zu (D)-Einheiten zwischen 1,0 bis 10,0 liegen.

Weitere bevorzugte Beispiele für die Alkylsiliconharze (A) sind Organopolysiloxanharze, die im Wesentlichen, vorzugsweise ausschließlich, aus T-Einheiten der Formeln AlkSiO_{3/2}, AlkSi(OR⁴)O_{2/2} und AlkSi(OR⁴)₂O_{1/2} sowie T-Einheiten der Formeln MeSiO_{3/2}, MeSi(OR⁴)O_{2/2} und MeSi(OR⁴)₂O_{1/2} bestehen, wobei Me, Alk und R⁴ die oben genannte Bedeutung aufweisen, mit einem molaren Verhältnis von Alk- zu Me-Einheiten von 0,5 bis 4,0.

Zusätzliche bevorzugte Beispiele für die Alkylsiliconharze (A) sind Organopolysiloxanharze, die im Wesentlichen, vorzugsweise ausschließlich, aus T-Einheiten der Formeln AlkSiO_{3/2}, AlkSi(OR⁴)O_{2/2} und AlkSi(OR⁴)₂O_{1/2} bestehen, wobei Alk und R⁴ die oben genannte Bedeutung aufweisen.

Ganz besonders bevorzugte Beispiele für die Alkylsiliconharze (A) sind Organopolysiloxanharze die eine der in den voranstehenden vier Absätzen beschriebene Zusammensetzung aufweisen, wobei Alk für *n*-Octyl-, 1,4,4-Trimethylpentyl- oder *n-*Hexadecylreste, insbesondere für n-Octyl- oder 1,4,4-Trimethylpentylreste, steht.

Vorzugsweise besitzen die Alkylsiliconharze (A) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 100 00 g/mol, insbesondere bei höchstens 1 500 g/mol.

Bestimmung mittels GPC. Gerät Iso Pump Agilent 1200, Autosampler Agilent 1200, Säulenofen Agilent 1260 Detektor, RID Agilent 1200, Säule Agilent 300 x 7,5 mm OligoPore Ausschluss 4500D, Säulenmaterial highly crosslinked Polystyrene/Divinylbenzene, 25 Eluent Toluol, Flussrate 0,7 ml/min, Injektionsvolumen 10 µl, Konzentration 1 g/l (in Toluol), PDMS (Polydimethylsiloxan)-Kalibrierung (Mp 28500 D Mp 25200 D, Mp 10500 D, Mp 5100 D, Mp 4160 D, Mp 1110 D, Mp 311D).

Die Alkylsiliconharze (A) können bei 23°C und 1000 hPa sowohl fest als auch flüssig sein, wobei die Alkylsiliconharze (A) bevorzugt flüssig sind. Vorzugsweise besitzen die Siliconharze (A) eine Viskosität von 10 bis 100 000 mPas, vorzugsweise von 50 bis 1 000 mPas, insbesondere von 100 bis 500 mPas.

Die Viskosität wird im Rahmen der vorliegenden Erfindung nach einer Temperierung auf 23°C mit einem DV 3 P-Rotationsviskosimeter von Fa. A. Paar (Brookfieldsystem), unter Verwendung von Spindel 5 bei 2,5 UpM entsprechend der ISO 2555 bestimmt.

In einer bevorzugten Ausführung der Erfindung, werden die Alkylsiliconharze (A) nicht durch Hydrolyse der entsprechenden Alkylalkoxysilane hergestellt, sondern durch eine Reaktion der entsprechenden Alkylchlorsilane mit Alkohol und Wasser.

In einer ganz besonderen Ausführung der Erfindung, werden die Alkylsiliconharze (A) in einem kontinuierlichem Verfahren aus den entsprechenden Alkylchlorsilanen, Alkohol und Wasser hergestellt.

Vorzugsweise werden die erfindungsgemäßen Alkylsiliconharze (A) dabei in einem kontinuierlichem Verfahren hergestellt, wobei ein oder gegebenenfalls auch mehrere Chlorsilane der allgemeinen Formel (II),

R¹ₐR³_{c}SiCl_{(4-a-c)} (II),

ein oder gegebenenfalls auch mehrere Alkohole der allgemeinen Formel (III)

R²OH (III)

und Wasser umgesetzt werden, wobei alle Variablen die oben genannten allgemeinen und bevorzugten Bedeutungen aufweisen. Derartige kontinuierliche Verfahren sind an sich bekannt. Allerdings wurden diese Verfahren bislang nicht zur Herstellung der erfindungsgemäßen Alkylsiliconharze (A) verwendet, die über die langkettigen Alkylgruppen verfügen.

Die Reaktion wird dabei in einer Reaktivkolonne durchgeführt, bei der der Alkohol und das Wasser im unteren Teil der Kolonne zugegeben und dort verdampft werden, wohingegen das oder die Alkylchlorsilane im oberen Kolonnenteil eingespeist werden. Im Gegenstromprinzip fließt dann die flüssige Mischung aus den eingesetzten Alkylchlorsilanen und in der Reaktionskolonne entstehenden Alkylsiliconharzen die Kolonne abwärts, während sich Alkohol, Wasser und der während der Reaktion entstehende Chlorwasserstoff in gasförmigen Zustand die Kolonne hinaufbewegen. Auf diese Weise können sehr hohe Umsatzraten erzielt werden, da im unteren Teil der Kolonne ein hoher Überschuss an Wasser und Alkohol vorhanden ist, der auch kleine Reste an verbliebenen siliciumgebundenen Chlor zur Reaktion bringt, wohingegen im oberen Kolonnenteil ein hoher Überschuss an Chlorsilan existiert, das sofort mit jedem noch vorhandenen Wasser- oder Alkoholmolekül reagiert.

Bevorzugt wird die Reaktion dabei bei Temperaturen zwischen 60 und 150 °C, besonders bevorzugt bei Temperaturen zwischen 80 und 120°C durchgeführt.

Bevorzugt wird bei der Reaktion Wasser/Alkohol im Verhältnis (Gew.) 1:0,2 bis 1:1, besonders bevorzugt im Verhältnis (Gew.) 1:0,4 bis 1:0,8 eingesetzt.

Gegebenenfalls kann auch ein organisches Lösungsmittel miteinbezogen werden, wobei sich alle organischen Lösungsmittel anbieten. Bevorzugt werden nicht reaktive organische Lösungsmittel eingesetzt, wie z.B. Toluol oder Xylol.

Gegebenenfalls kann die Reaktion nicht nur in einer einzelnen Kolonne sondern auch in zwei hintereinander geschalteten Kolonnen stattfinden. In diesem Fall wird das eingesetzte Chlorsilan bzw. das entstehende Siliconharz (A) vom Kopf von Kolonne 1 abwärts geführt, wobei der Sumpf dieser Kolonne dann ausgeschleust und in den oberen Bereich von Kolonne 2 überführt wird. Auch dort bewegt sich das Silan dann abwärts, so dass aus dem Sumpf von Kolonne 2 dann das fertige und idealerweise weitgehend chloridfreie Produkt mit einem Chloridgehalt von vorzugsweise <50 ppm erhalten werden kann. Wie schon beim Einkolonnenverfahren bewegt sich auch hier das gasförmige Gemisch aus Alkohol, Wasser und entstehender Salzsäure in genau entgegengesetzter Richtung vom Fuß von Kolonne 2 zu deren Kopf, um dann in den Fuß von Kolonne 1 überführt zu werden und auch diese Kolonne gasförmig bis zum Kopf aufzusteigen.

Gegebenenfalls handelt es sich bei Kolonne 2 auch nur um eine sogenannte "Stripkolonne", bei der geringfügige im Fuß von Kolonne 1 noch vorhandene Reste an Chlorwasserstoff oder silciumgebundenes Chlorid mit einem großen Überschuss an im Kolonnenfuß verdampften Wasser und Alkohol aus dem Produktgemisch entfernt werden.

Gegebenenfalls kann bei diesem Verfahren der Kolonne bzw. den Kolonnen auch noch ein sogenannter Vorreaktor vorgeschaltet werden, in der die Chlorsilan-Vorstufe bereits mit einem Teil des einzusetzenden Wassers und/oder Alkohols zu einem teilalkoxylierten und/oder teilkondensierten Zwischenprodukt umgesetzt wird, bevor dieses dann in der eigentlichen Reaktionskolonne bzw. den Reaktionskolonnen zum fertigen Endprodukt umgesetzt wird.

Der Vorreaktor kann beispielsweise aus einem Rührkessel, einem Rohrreaktor oder einem Loop-Reaktor bestehen. Dabei werden in dem Vorreaktor vorzugsweise maximal 80% der molaren siliciumgebundenen Chloreinheiten mit Alkohol und/oder Wasser zur Reaktion gebracht. Danach wird die erhaltene Mischung vorzugsweise am Kopf der Reaktionskolonne, bzw. im Falle von zwei Reaktionskolonnen am Kopf von Kolonne 1, in diese überführt, wo die Reaktion dann vervollständigt wird.

Der im gesamten Prozess gewonnene Chlorwasserstoff wird vorzugsweise von kondensierbaren Anteilen befreit, die ihrerseits wieder in den Prozess zurückgeführt werden. Der Chlorwasserstoff steht damit als Gas für eine Rückgewinnung und Weiterverwertung zur Verfügung.

Der einzusetzende Alkohol und das einzusetzende Wasser können dabei prinzipiell in alle jeweils vorhandenen Reaktionseinheiten gegeben werden. Vorzugsweise wird die Hauptmenge jedoch in den Fußbereich der Reaktionskolonne, bzw. im Falle von zwei Reaktionskolonnen in den Fußbereich von Kolonne 2 dosiert, um das Rohprodukt im Gegenstrom von allen flüchtigen Bestandteilen, insbesondere von anhaftenden Chlorwasserstoffresten, zu befreien und eventuell noch vorhandene siliciumgebundene Chloreinheiten zur Nachreaktion zu bringen.

Sofern ein Vorreaktor eingesetzt wird, wird am Kopf der Reaktionskolonne, bzw. im Falle von zwei Reaktionskolonnen am Kopf von Kolonne 2 noch vorhandenes Wasser und noch vorhandener Alkohol kondensiert und anschließend in den Vorreaktor überführt.

Vorzugsweise wird das erfindungsgemäße kontinuierliche Verfahren in einer Anlage durchgeführt, die einen Vorreaktor und zwei Kolonnen umfasst.

Ein entsprechendes Verfahren und eine entsprechende Anlage sind z.B. aus der EP 1686132 bekannt.

Bei dem Verfahren zur Massenhydrophobierung von Faserzement wird eine Mischung enthaltend Wasser, Fasern, Zement und Alkylsiliconharz (A) hergestellt.

Bei dem oben beschriebenen kontinuierlichen Verfahren ausgehend von Chloralkylsilanen werden Alkylsiliconharze (A) erhalten, die sich in der Zusammensetzung von T-Einheiten (Alk-SiO_{3/2)} bzw. (Me-SiO_{3/2)}), D-Einheiten (Alk-Si(OR⁴)O_{2/2} bzw. Me-Si(OR⁴)O_{2/2}) und M-Einheiten (Alk-Si(OR⁴)₂O_{1/2} bzw. Me-Si(OR⁴)₂O_{1/2}) signifikant von Produkten unterscheidet, die nach anderen Verfahren wie z.B. einer Hydrolyse der entsprechenden Alkoxysilane erhalten wurden.

Überraschenderweise wurde gefunden, dass die nach dem oben beschriebenen besonders kostengünstigen kontinuierlichen Verfahren hergestellten Alkylsiliconharze (A) bei einem Einsatz zur Massenhydrophobierung von Faserzement zu besseren Ergebnissen führen, als chemisch ähnliche - aber nicht identische - Produkte, wie sie nach anderen Verfahren herstellbar sind.

Bei der Massenhydrophobierung wird vorzugsweise ein Additiv (ADD) eingesetzt, das Alkylsiliconharze (A) enthält oder ausschließlich aus einem oder mehreren Alkylsiliconharzen (A) besteht.

Bei diesen weiteren Bestandteilen kann es sich beispielsweise um monomere Silane (S) der allgemeinen Formel IV

R¹ₐ(R²O)_{(4-a-c)}R³_{c}Si (IV)

handeln, wobei alle Variablen die oben angegebene Bedeutung aufweisen.

Wenn monomere Silane (S) der Formel (IV) in dem Additiv (ADD) vorhanden sind, liegen deren Mengen vorzugsweise bei maximal 10 Gewichtsteilen, besonders bevorzugt bei maximal 5 Gewichtsteilen, insbesondere bevorzugt bei maximal 1 Gewichtsteil, jeweils bezogen auf 100 Gewichtsteile Komponente (A). Die Untergrenze für den Gehalt an Silanen (S) liegt bei allen bevorzugten Ausführungsformen bei 0 Gewichtsteilen.

Auch andere Silane oder deren Teilhydrolysate, z.B. Aminosilane oder Wasserfängersilane können zugesetzt werden. Beispiele für gegebenenfalls zugesetzte Aminosilane sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate.

Beispiele für gegebenenfalls zugesetzte Wasserfängersilane sind Silane wie Vinyltrimethoxysilan, Vinyltriethoxysilan, Vinylmethyldimethoxysilan, Tetraethoxysilan, O-Methylcarbamatomethyl-methyldimethoxysilan, O-Methylcarbamatomethyl-trimethoxysilan, O-Ethylcarbamatomethylmethyldiethoxysilan, O-Ethylcarbamatomethyl-triethoxysilan, und/oder deren Teilkondensate.

Auch weitere Zusatzstoffe, wie Emulgatoren, Katalysatoren, Biozide oder weitere hydrophobierend wirkende Komponenten wie langkettige Fettsäuren, Methylsiliconharze oder Siliconöle können in dem Additiv (ADD) enthalten sein.

In einer bevorzugten Ausführung ist das Additiv (ADD) jedoch frei von Aminosilanen, Wasserfängersilanen, Katalysatoren, Bioziden oder weiteren hydrophobierend wirkenden Komponenten. Sofern Emulgatoren vorhanden sind, sind sie vorzugsweise in Mengen von weniger als 20 Gewichtsteilen, besonders bevorzugt von weniger als 10 Gewichtsteilen, jeweils bezogen auf 100 Gewichtsteile Alkylsiliconharze (A).

In einer Ausführung handelt es sich bei dem Additiv (ADD) um eine organische Lösung, die die Alkylsiliconharze (A) sowie gegebenenfalls weitere Bestandteile enthält. Als Lösungsmittel (L) können dabei sämtliche bekannten organischen Lösungsmittel mit einem Siedepunkt <250 °C bei 1013 mbar eingesetzt werden.

Beispiele für gegebenenfalls eingesetzte Lösungsmittel (L) sind Ether, wie z.B. Diethylether, Methyl-t-butylether, Etherderivate des Glycols und THF; Ester, wie z.B. Ethylacetat, Butylacetat und Glycolester; aliphatische Kohlenwasserstoffe, wie z.B. Pentan, Cyclopentan, Hexan, Cyclohexan, Heptan, Octan oder auch längerkettige verzweigte und unverzweigte Alkane; Ketone, wie z.B. Aceton und Methylethylketon; Aromaten, wie z.B. Toluol, Xylol, Ethylbenzol und Chlorbenzol; oder auch Alkohole, wie z.B. Methanol, Ethanol, Glycol, Propanol, iso-Propanol, Glycerin, Butanol, iso-Butanol und t-Butanol.

In einer weiteren Ausführung handelt es sich bei dem Additiv (ADD) um eine wässrige Emulsion, die Alkylsiliconharze (A), mindestens einen Emulgator sowie gegebenenfalls weitere Bestandteile enthält. Geeignete Emulgatoren sind beispielsweise in EP 0908498 (A2), Absätze [0045] bis [0049] beschrieben.

Sofern das Additiv (ADD) weder eine Lösung mit einem organischen Lösungsmittel noch eine wässrige Suspension darstellt, liegt der Gehalt an Alkylsiliconharzen (A) in dem Additiv (ADD) vorzugsweise bei mindestens 30 Gew.-%, besonders bevorzugt bei mindestens 50 Gew.-%, insbesondere bei mindestens 80 Gew.-%. Die Obergrenze liegt bei allen bevorzugten Ausführungsformen bei 100 Gew.-%.

Sofern das Additiv (ADD) eine Lösung mit einem organischen Lösungsmittel oder eine wässrige Suspension darstellt, liegt der Gehalt an Alkylsilconharzen (A) in dem Additiv (ADD) vorzugsweise bei mindestens 10 Gew.-%, besonders bevorzugt bei mindestens 25 Gew.-%, insbesondere bei mindestens 40 Gew.-%. Die Obergrenze liegt in diesem Fall vorzugsweise bei höchstens 90 Gew.-%, besonders bevorzugt bei höchstens 75 Gew.-%, insbesondere bei höchstens 65 Gew.-%.

Bei der Massenhydrophobierung wird das Additiv (ADD) vorzugsweise bereits dem stark verdünnten Schlamm aus Fasern und Zement sowie gegebenenfalls weitere Bestandteile der Faserzementplatte zugesetzt. Unter den in dem verdünnten Schlamm herrschenden stark basischen Bedingungen kommt es zu einer Hydrolyse der erfindungsgemäßen Alkylsiliconharze (A), welche anschließend mit den Oberflächen der in der Zementschlämme vorhandenen Festkörperpartikel reagieren und diese hydrophobieren können.

Dabei wird das Additiv (ADD) vorzugsweise in Mengen von mindestens 0,01 Gewichtsteilen, besonders bevorzugt von mindestens 0,05 Gewichtsteilen, insbesondere von 0,1 Gewichtsteilen eingesetzt, jeweils bezogen auf 100 Gewichtsteile eingesetzten Zement. Gleichzeitig wird das Additiv (ADD) vorzugsweise in Mengen von höchstens 5 Gewichtsteilen, besonders bevorzugt von höchstens 1 Gewichtsteil, insbesondere von 0,5 Gewichtsteilen eingesetzt, jeweils bezogen auf 100 Gewichtsteile eingesetzten Zement.

Bei dem eingesetzten Zement handelt es sich vorzugsweise um Portlandzement. Als Fasern werden vorzugsweise Asbest-, Cellulose-, PVA-, PVOH-, PP- oder PET-Fasern verwendet. Weitere Bestandteile der Faserzementformulierung können Sand, Kalkstein oder weitere Füllstoffe wie Silica darstellen.

Die Additive (ADD) besitzen den Vorteil, bei der Hydrolyse nur noch vergleichsweise wenig Alkohol abspalten zu können, welcher nach dem beschriebenen Zusatz zu der Zementschlämme gegebenenfalls im abgetrennten Prozesswasser verbleiben könnte.

Gleichzeitig weist das Additiv (ADD) den Vorteil auf, eine besonders gute hydrophobierende Wirkung zu besitzen, die der hydrophobierenden Wirkung der entsprechenden monomeren Silane überraschenderweise deutlich überlegen ist.

Ein weiterer Vorteil des Additivs (ADD) ist die einfache und preisgünstige Herstellbarkeit der in dem Additiv (ADD) enthaltenen Alkylsilconharze (A) durch ein kontinuierliches Herstellverfahren.

Weitere Vorteile des erfindungsgemäßen Additivs (ADD) stellen dessen hohe Lagerstabilität und dessen einfache Anwendbarkeit dar.

In den nachstehend beschriebenen Beispielen beziehen sich alle Viskositätsangaben auf eine Temperatur von 23 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiele

### Herstellbeispiel 1: Herstellung eines erfindungsgemäßen Siliconharzes mit 1,4,4-Trimethylpentylgruppen

Für das kontinuierliche Herstellverfahren des erfindungsgemäßen Siliconharzes wird eine Doppelkolonnenanlage eingesetzt, die aus einer Reaktionskolonne 1 mit einer Länge von 4,4 m und einem Durchmesser von 50 mm, die mit Keramik-Füllkörpern (Keramiksättel) mit einer Größe von 0,5 Zoll gefüllt ist, und einer identischen Strippkolonne 2 besteht. Das genutzte Sumpfvolumen beider Kolonnen liegt bei je 2000 ml. Der Eduktdurchsatz pro Versuch liegt bei 9-10 kg 1,4,4-Trimethylpentyl-trichlorsilan. Die Verweilzeit beträgt 60 bis 70 min.

In einem Zeitraum von 6 Stunden werden 9,00 kg 1,4,4-Trimethylpentyl-trichlorsilan mit einer Dosierleistung von 1500 g/h auf den Kopf der Kolonne 1 aufgegeben. Zeitgleich werden 1,18 kg Ethanol mit einer Dosierleistung von 197 g/h sowie 0,72 kg Wasser (entmineralisiert) mit einer Dosierleistung von 120 g/h jeweils in den Sumpf der Kolonne 1 aufgegeben. Zeitgleich dazu und ebenfalls in einem Zeitraum von 6h werden 0,24 kg Ethanol mit einer Dosierleistung von 40 g/h in den Sumpf der Kolonne 2 aufgegeben.

Das Kopfdestillat der Kolonne 1 wird auf den Kopf der Kolonne 1 zurückgeführt. Das Kopfdestillat der Kolonne 2 wird in den Sumpf der Kolonne 1 zurückgeführt. Die Sumpftemperatur der Kolonne 1 liegt bei 85°C (+/- 4 °C). Die Sumpftemperatur der Kolonne 2 liegt bei 114°C (+/- 4 °C). Somit reagieren im Gegenstromprinzip die Edukte zum gewünschten Produkt das in Ethanol gelöst erhalten wird.

Das so hergestellte Rohprodukt wird mit einer Lösung aus 30 % Natriummethanolat in Methanol neutralisiert, filtriert und destillativ von Niedersiedern, wie z.B. Ethanol, befreit.

Das aufbereitete Produkt (Harz 1) enthält weniger als 20 ppm HCl. Es wird mittels ¹H/²⁹Si NMR sowie GPC analysiert. Die Bestimmung der Viskosität erfolgt wie oben beschrieben. Die dabei erhaltenen Daten finden sich in Tabelle 1.

### Herstellbeispiel 2: Herstellung eines Siliconharzes mit 1,4,4-Trimethylpentylgruppen

Es wird dieselbe Anlage verwendet wie in Herstellbeispiel 1.

In einem Zeitraum von 7 Stunden werden 10 kg 1,4,4-Trimethylpentyl-trichlorsilan mit 1500 g/h Dosierleistung auf den Kopf der Kolonne 1 aufgegeben. Zeitgleich und ebenfalls in 6 Stunden werden 1,38 kg Ethanol mit einer Dosierleistung von 197 g/h sowie 1,38 kg Wasser (entmineralisiert) mit einer Dosierleistung von 197 g/h jeweils in den Sumpf der Kolonne 1 aufgegeben. Zeitgleich dazu und ebenfalls in einem Zeitraum von 6 h werden 0,30 kg Ethanol mit einer Dosierleistung von 43 g/h in den Sumpf der Kolonne 2 aufgegeben.

Das Kopfdestillat der Kolonne 1 wird auf den Kopf der Kolonne 1 zurückgeführt. Das Kopfdestillat der Kolonne 2 wird in den Sumpf der Kolonne 1 zurückgeführt. Die Sumpftemperatur der Kolonne 1 liegt bei 80°C (+/-2 °C). Die Sumpftemperatur der Kolonne 2 liegt bei 106°C (+/- 2 °C). Somit reagieren im Gegenstromprinzip die Edukte zum gewünschten Produkt das in Ethanol gelöst erhalten wird.

Das so hergestellte Rohprodukt wird mit einer Lösung aus 30 % Natriummethanolat in Methanol neutralisiert, filtriert und destillativ von Niedersiedern wie z.B. Ethanol, befreit.

Das aufbereitete Produkt (Harz 2) enthält weniger als 20 ppm HCl. Es wird mittels ¹H/²⁹Si NMR sowie GPC analysiert. Die Bestimmung der Viskosität erfolgt wie oben beschrieben. Die dabei erhaltenen Daten finden sich in Tabelle 1.

**Tabelle 1:**

| Bestimmte Kenngröße | Verwendete Analytikmethode | Harz 1 | Harz 2 |
|---|---|---|---|
| Eingesetztes Verhältnis Wasser/EtOH [mol/mol] | | 1:0,77 | 1:0,48 |
| Gehalt Alkoxygruppen [Gew. - %] | ¹H-NMR | 10,4 | 10,6 |
| Gehalt -Si(OEt)₃ [Mol-%] | ²⁹Si-NMR | 0,4 | 0,0 |
| Gehalt -Si (OEt) ₂O_{1/2} [Mol-%] | ²⁹Si-NMR | 26,2 | 24,1 |
| Gehalt -Si (OEt) O_{2/2} [Mol-%] | ²⁹Si-NMR | 61,1 | 60,4 |
| Gehalt -SiO_{3/2} [Mol-%] | ²⁹Si-NMR | 12,3 | 15,5 |
| Viskosität [MPas] | s.o. | 153 | 198 |
| Mn [g/mol] | GPC | 1000 | 1087 |
| Mw [g/mol] | GPC | 1100 | 1195 |

### Verwendete Materialien

Faserschlämme (5% Cellulosefasern 95% Wasser): 90% der Faserstränge besitzen eine Länge zwischen 1-6 mm und einen Durchmesser zwischen 10-40 µm (+- 5µm). Die Fasern liegen sowohl einzeln als auch büschelweise vor. Die einzelnen Faserstränge sind dabei teilweise an manchen Stellen weiter zerfasert.
Synthetische PP-Fasern: Durchmesser 18 µm (+-3 µm), Länge 6 mm (+- 1 mm).
Kalk: Nekafill® 15, Kalkfabrik Netstal AG; Zusammensetzung: 91,9% CaCO₃ 5,4% MgCO₃, Siebanalyse Rückstand (Sieb 0,500 mm 0,0%, Sieb 0,125 mm 1,9%, Sieb 0,063 mm 18,7%).
Quarzmehl: Amberger Kaolinwerke, Eduard Kick GmbH & Co. KG, Typ 16.900, Trockensiebrückstand (DIN EN 933-10) 2 Gew.-% >40 µm Maschenweite.
Zement: Portlandzement OPC Type II-F (ASTM C150 (Standard Specification for Portland Cement)).
Filterpapier: Whatman® Quantitative Filter Paper (Article No., 28414113 (US reference)), ashless, Grade 589/2 white ribbon, circles, Durchmesser 90 mm, Dicke 180 µm, Porengröße 4-12 µm Gewicht 85 g/m2.

### Verwendete Geräte

Flügelrührer: IKA RW20
Pressform :

**Ring (VA-Stahl):**

| | |
|---|---|
| Durchmesser innen: | 80 mm |
| Durchmesser außen: | 100 mm |
| Höhe: | 40 mm |

**Zylinder (Aluminium):**

| | |
|---|---|
| Durchmesser: | 79-80 mm |
| Höhe: | 60 mm |

Ringmarkierungen zwischen Höhe 18 mm bis 24 mm zur optischen Beurteilung der Eintauchtiefe.

**Bodenplatten (VA-Stahl):**

| | |
|---|---|
| Gesamtdurchmesser: | 100 mm |
| Gesamthöhe: | 30 mm |

Nut 10 mm x 10 mm von oben eingefräst. Nut nimmt Ring auf.
Presse: hydraulische Zylinderpresse bis 180 bar max.
Klimaraum: Der Raum zur Konditionierung der Probekörper weißt eine Temperatur von 23 °C bei 50% rel. Luftfeuchtigkeit auf.
Trockenschrank: UF 110 der Firma Memmert.

### Beispiel 1 (nicht erfindungsgemäß): Herstellung einer nicht additivierten nicht autoklavierten Faserzementplatte

Zu einer 5%igen Faserschlämme (50 g) werden nacheinander unter Rühren (1500 U/min, 15 Minuten) Wasser (2500 g), synthetische PP-Fasern (0,75 g), Kalk (7,5 g) und Zement (39,25 g) zugegeben. Anschließend wird die resultierende Mischung für 2 h mit 1500 U/min gerührt. Die resultierende Mischung wird in einer Porzellannutsche (Durchmesser 10 cm) über Filterpapier unter Wasserstrahlpumpenvakuum filtriert.

Anschließend wird der noch feuchte Rückstand in eine Metallpressform verteilt und bei 100 bar verpresst. Die resultierende Faserzementplatte wird aus der Form gelöst und anschließend 2 Wochen in einer Klimakammer gelagert. Die erhaltene Faserzementplatte weist eine Dichte von 1,50 g/ml auf.

### Beispiel 2 (nicht erfindungsgemäß): Herstellung einer mit monomerem 1,4,4-Trimethylpentyl-triethoxysilan additivierten nicht autoklavierten Faserzementplatte

Zu einer 5%igen Faserschlämme (50 g) werden nacheinander unter Rühren (1500 U/min, 15 Minuten) Wasser (2500 g), synthetische PP-Fasern (0,75 g), Kalk (7,5 g), Zement (39,25 g) und 1,4,4-Trimethylpentyl-triethoxysilan (0,1 g) zugegeben. Anschließend wird die resultierende Mischung für 2 h mit 1500 U/min gerührt. Die weitere Verarbeitung erfolgt wie bei Beispiel 1 beschrieben. Die erhaltene Faserzementplatte weist eine Dichte von 1,51 g/ml auf.

### Beispiel 3 (nicht erfindungsgemäß): Herstellung einer mit monomerem n-Octyl-triethoxysilan additivierten nicht autoklavierten Faserzementplatte

Es wird vorgegangen wie bei Beispiel 2, jedoch wird anstelle von 0,1 g 1,4,4-Trimethylpentyl-triethoxysilan dieselbe Menge n-Octyltriethoxysilan eingesetzt. Die erhaltene Faserzementplatte weist eine Dichte von 1,45 g/ml auf.

### Beispiel 4 (erfindungsgemäß): Herstellung einer mit Harz 1 additivierten nicht autoklavierten Faserzementplatte

Es wird vorgegangen wie bei Beispiel 2, jedoch wird anstelle von 0,1 g 1,4,4-Trimethylpentyl-triethoxysilan dieselbe Menge Harz 1 aus Herstellbeispiel 1 eingesetzt. Die erhaltene Faserzementplatte weist eine Dichte von 1,45 g/ml auf.

### Beispiel 5: Bestimmung der Wasseraufnahme von Faserzementplatten

Die in den Beispielen 1 bis 4 erhaltenen Faserzementplatten werden für 24 h bei 40°C im Trockenschrank bis zur Massenkonstanz getrocknet. Anschließend wird die Wasseraufnahme mittels Druckwasserlagerung entsprechend der DIN EN 520 bestimmt. Die Ergebnisse dieser Messungen finden sich in Tabelle 2.

**Tabelle 2:**

| | Beispiel 1* | Beispiel 2* | Beispiel 3 | Beispiel 4 |
|---|---|---|---|---|
| Wasseraufnahme nach 2 h [Gew.-%] | 26, 0 | 19,5 | 19,3* | 1,9 |
| Reduktion der Wasseraufnahme nach 2 h [%] | | 25,0 | 25,8 | 92,9 |
| Wasseraufnahme nach 24 h [Gew.-%] | 27,8 | 23,1 | 23,0 | 4,3 |
| Reduktion der Wasseraufnahme nach 24 h [%] | | 16,9 | 17,3 | 84,5 |

| | | | | |
|---|---|---|---|---|
| * nicht erfindungsgemäß | | | | |

### Beispiel 6 (nicht erfindungsgemäß): Herstellung einer nicht additivierten autoklavierten Faserzementplatte

Zu einer 5%igen Faserschlämme (80 g) werden nacheinander unter Rühren (1500 U/min, 15 Minuten) Wasser (2500 g), Zement (26 g) und Quarzmehl (20 g) zugegeben. Anschließend wird die resultierende Mischung für 2 h mit 1500 U/min gerührt. Die resultierende Mischung wird in einer Porzellannutsche (Durchmesser 10 cm) über Filterpapier unter Wasserstrahlpumpenvakuum filtriert.

Anschließend wird der noch feuchte Rückstand in eine Metallpressform verteilt und bei 170 bar verpresst. Die resultierende Faserzementplatte wird aus der Form gelöst und anschließend 2 Wochen in einer Klimakammer gelagert. Anschließend wird die Faserzementplatte autoklaviert (12 bar Wasserdampf, 180 °C, 6 h) und erneut 2 Wochen in einer Klimakammer gelagert. Die erhaltene Faserzementplatte weist eine Dichte = 1,34 g/ml auf.

### Beispiel 7 (nicht erfindungsgemäß): Herstellung einer mit monomerem 1,4,4-Trimethylpentyl-triethoxysilan additivierten autoklavierten Faserzementplatte

Zu einer 5%igen Faserschlämme (80 g) werden nacheinander unter Rühren (1500 U/min, 15 Minuten) Wasser (2500 g), Zement (26 g), Quarzmehl (20g) und 1,4,4-Trimethylpentyl-triethoxysilan (0,1 g) zugegeben. Anschließend wird die resultierende Mischung für 2 h mit 1500 U/min gerührt. Die weitere Verarbeitung erfolgt wie bei Beispiel 6 beschrieben. Die erhaltene Faserzementplatte weist eine Dichte von 1,38 g/ml auf.

### Beispiel 8 (nicht erfindungsgemäß): Herstellung einer mit monomerem n-Octyl-triethoxysilan additivierten autoklavierten Faserzementplatte

Es wird vorgegangen wie bei Beispiel 7, jedoch wird anstelle von 0,1 g 1,4,4-Trimethylpentyl-triethoxysilan dieselbe Menge n-Octyltriethoxysilan eingesetzt. Die erhaltene Faserzementplatte weist eine Dichte von 1,31 g/ml auf.

### Beispiel 9 (erfindungsgemäß): Herstellung einer mit Harz 1 additivierten autoklavierten Faserzementplatte

Es wird vorgegangen wie bei Beispiel 7, jedoch wird anstelle von 0,1 g 1,4,4-Trimethylpentyl-triethoxysilan dieselbe Menge Harz 1 aus Herstellbeispiel 1 eingesetzt. Die erhaltene Faserzementplatte weist eine Dichte von 1,30 g/ml auf.

### Beispiel 10 (erfindungsgemäß): Herstellung einer mit Harz 2 additivierten autoklavierten Faserzementplatte

Es wird vorgegangen wie bei Beispiel 7, jedoch wird anstelle von 0,1 g 1,4,4-Trimethylpentyl-triethoxysilan dieselbe Menge Harz 2 aus Herstellbeispiel 2 eingesetzt. Die erhaltene Faserzementplatte weist eine Dichte von 1,32 g/ml auf.

### Beispiel 5: Bestimmung der Wasseraufnahme von Faserzementplatten

Die in den Beispielen 6 bis 10 erhaltenen Faserzementplatten werden für 24 h bei 40°C im Trockenschrank bis zur Massenkonstanz getrocknet. Anschließend wird die Wasseraufnahme mittels Druckwasserlagerung entsprechend der DIN EN 520 bestimmt. Die Ergebnisse dieser Messungen finden sich in Tabelle 3.

**Tabelle 3:**

| | Beispiel 6* | Beispiel 7* | Beispiel 8* | Beispiel 9 | Beispiel 10 |
|---|---|---|---|---|---|
| Wasseraufnahme nach 2 h [Gew.-%] | 30,8 | 21,3 | 21,3 | 2,3 | 2,5 |
| Reduktion der Wasseraufnahme nach 2 h [%] | | 30,8 | 30,8 | 92,5 | 91,9 |
| Wasseraufnahme nach 24 h [Gew.-%] | 34,6 | 25,7 | 25,1 | 5,0 | 5,5 |
| Reduktion der Wasseraufnahme nach 24 h [%] | | 25,7 | 27,5 | 85,5 | 84,1 |

| | | | | | |
|---|---|---|---|---|---|
| * nicht erfindungsgemäß | | | | | |

## Patentansprüche

1. Alkylsiliconharz (A) enthaltend mindestens 80 Gew.-% Einheiten der allgemeinen Formel I
R¹ₐ(R²O)_{b}R³_{c}SiO_{(4-a-b-c)/2} (I),
wobei
R¹ gleich oder verschieden sein kann und einen einwertigen, SiC-gebundenen, unsubstituierten oder substituierten aliphatischen Kohlenwasserstoffrest mit maximal 4 Kohlenstoffatomen bedeutet,
R² gleich oder verschieden sein kann und einen einwertigen, unsubstituierten oder substituierten Kohlenwasserstoffrest mit maximal 4 Kohlenstoffatomen bedeutet,
R³ gleich oder verschieden sein kann und einen einwertigen, SiC-gebundenen, unsubstituierten oder substituierten Kohlenwasserstoffrest mit mindestens 5 Kohlenstoffatomen bedeutet,
a 0, 1, 2 oder 3 ist,
b 0, 1, 2 oder 3 ist und
c 0, 1 oder 2 ist, mit der Maßgabe, dass die Summe aus a+b+c kleiner oder gleich 3 ist und in mindestens 50 % der Einheiten der Formel (I) die Summe a+b gleich 0 oder 1 und in mindestens 20% der Einheiten der allgemeinen Formel (I) c gleich 1 ist,
wobei der Gehalt an Alkoxygruppen R²O 5-20 Gew.-% beträgt.

2. Verfahren zur Herstellung von Alkylsiliconharz (A) gemäß Anspruch 1, bei dem in einem kontinuierlichen Verfahren Chlorsilan der allgemeinen Formel (II),
R¹ₐR³_{c}SiCl_{(4-a-c)} (II),
Alkohol der allgemeinen Formel (III)
R²OH (III)
und Wasser in einer Reaktivkolonne umgesetzt werden, bei der der Alkohol und das Wasser im unteren Teil der Kolonne zugegeben und dort verdampft werden und das Alkylchlorsilan im oberen Kolonnenteil eingespeist wird,
wobei
R¹ gleich oder verschieden sein kann und einen einwertigen, SiC-gebundenen, unsubstituierten oder substituierten aliphatischen Kohlenwasserstoffrest mit maximal 4 Kohlenstoffatomen bedeutet,
R² gleich oder verschieden sein kann und einen einwertigen, unsubstituierten oder substituierten Kohlenwasserstoffrest mit maximal 4 Kohlenstoffatomen bedeutet,
R³ gleich oder verschieden sein kann und einen einwertigen, SiC-gebundenen, unsubstituierten oder substituierten Kohlenwasserstoffrest mit mindestens 5 Kohlenstoffatomen bedeutet,
a 0, 1, 2 oder 3 ist, und
c 0, 1 oder 2 ist, mit der Maßgabe, dass in mindestens 20% der Einheiten der allgemeinen Formel (I) c gleich 1 ist.

3. Alkylsiliconharz (A) nach Anspruch 1 oder Verfahren nach Anspruch 2, bei dem der Rest R² ausgewählt wird aus Methyl- und Ethylrest.

4. Alkylsiliconharz (A) nach Anspruch 1 oder 3 oder Verfahren nach Anspruch 2 oder 3, bei dem mindestens 90 Mol-% aller Reste R¹ Methylrest bedeuten.

5. Alkylsiliconharz (A) nach Anspruch 1, 3 oder 4 oder Verfahren nach Anspruch 2, 3 oder 4, das jeweils bezogen auf die Gesamtzahl an Einheiten der allgemeinen Formel (I), 8 bis 65 %, Einheiten der allgemeinen Formel (I) aufweist, in denen **b** für den Wert 0 steht.

6. Alkylsiliconharz (A) nach Anspruch 1, 3, 4 oder 5 oder Verfahren nach Anspruch 2, 3, 4 oder 5, das jeweils bezogen auf die Gesamtzahl an Einheiten der allgemeinen Formel (I), 30 bis 70 %, Einheiten der allgemeinen Formel (I) aufweist, in denen **b** für den Wert 1 steht.

7. Verfahren zur Massenhydrophobierung von Faserzement, bei dem eine Mischung enthaltend Wasser, Fasern, Zement und Alkylsiliconharz (A) gemäß Anspruch 1, 3, 4, 5 oder 6 oder hergestellt nach dem Verfahren gemäß Anspruch 2, 3, 4, 5 oder 6, hergestellt wird.

8. Verwendung von Alkylsiliconharz (A) gemäß Anspruch 1, 3, 4, 5 oder 6 oder hergestellt nach dem Verfahren gemäß Anspruch 2, 3, 4, 5 oder 6, zur Massenhydrophobierung von Faserzement.

## Claims

1. Alkyl silicone resin (A) containing at least 80% by weight of units of the general formula I
R¹ₐ(R²O)_{b}R³_{c}SiO_{(4-a-b-c)/2} (I),
where
the radicals
R¹ can be identical or different and are each a monovalent, SiC-bonded, unsubstituted or substituted aliphatic hydrocarbon radical having not more than 4 carbon atoms, the radicals
R² can be identical or different and are each a monovalent, unsubstituted or substituted hydrocarbon radical having not more than 4 carbon atoms, the radicals
R³ can be identical or different and are each a monovalent, SiC-bonded, unsubstituted or substituted hydrocarbon radical having at least 5 carbon atoms,
a is 0, 1, 2 or 3,
b is 0, 1, 2 or 3, and
c is 0, 1 or 2, with the proviso that the sum of a+b+c is less than or equal to 3 and in at least 50% of the units of the formula (I) the sum a+b is 0 or 1 and in at least 20% of the units of the general formula (I) c is 1,
where the content of alkoxy groups R²O is 5-20% by weight.

2. Process for producing alkyl silicone resin (A) according to Claim 1, wherein chlorosilane of the general formula (II)
R¹ₐR³_{c}SiCl_{(4-a-c)} (II),
alcohol of the general formula (III)
R²OH (III)
and water are reacted in a reaction column in a continuous process, with the alcohol and the water being introduced in the lower part of the column and vaporized there and the alkyl chlorosilane being fed in in the upper part of the column,
where
the radicals
R¹ can be identical or different and are each a monovalent, SiC-bonded, unsubstituted or substituted aliphatic hydrocarbon radical having not more than 4 carbon atoms, the radicals
R² can be identical or different and are each a monovalent, unsubstituted or substituted hydrocarbon radical having not more than 4 carbon atoms, the radicals
R³ can be identical or different and are each a monovalent, SiC-bonded, unsubstituted or substituted hydrocarbon radical having at least 5 carbon atoms,
a is 0, 1, 2 or 3, and
c is 0, 1 or 2, with the proviso that in at least 20% of the units of the general formula (I) c is 1.

3. Alkyl silicone resin (A) according to Claim 1 or process according to Claim 2, wherein the radical R² is selected from among methyl and ethyl radicals.

4. Alkyl silicone resin (A) according to Claim 1 or 3 or process according to Claim 2 or 3, wherein at least 90 mol% of all radicals R¹ are methyl radicals.

5. Alkyl silicone resin (A) according to Claim 1, 3 or 4 or process according to Claim 2, 3 or 4, which comprises, in each case based on the total number of units of the general formula (I), from 8 to 65% of units of the general formula (I) in which **b** is 0.

6. Alkyl silicone resin (A) according to Claim 1, 3, 4 or 5 or process according to Claim 2, 3, 4 or 5 which comprises, in each case based on the total number of units of the general formula (I), from 30 to 70% of units of the general formula (I) in which **b** is 1.

7. Process for the bulk hydrophobicization of fibrocement, wherein a mixture containing water, fibers, cement and alkyl silicone resin (A) according to Claim 1, 3, 4, 5 or 6 or produced by the process according to Claim 2, 3, 4, 5 or 6 is produced.

8. Use of alkyl silicone resin (A) according to Claim 1, 3, 4, 5 or 6 or produced by the process according to Claim 2, 3, 4, 5 or 6 for the bulk hydrophobicization of fibrocement.

## Revendications

1. Résine d'alkylsilicone (A) contenant au moins 80% en poids de motifs de formule générale I
R¹ₐ(R²O)_{b}R³_{c}SiO_{(4-a-b-c)/2} (I),
dans laquelle
R¹ peut être identique ou différent et signifie un radical hydrocarboné aliphatique monovalent, lié par SiC, non substitué ou substitué, comprenant au maximum 4 atomes de carbone,
R² peut être identique ou différent et signifie un radical hydrocarboné monovalent, non substitué ou substitué, comprenant au maximum 4 atomes de carbone,
R³ peut être identique ou différent et signifie un radical hydrocarboné monovalent, lié par SiC, non substitué ou substitué, comprenant au moins 5 atomes de carbone,
a vaut 0, 1, 2 ou 3,
b vaut 0, 1, 2 ou 3 et
c vaut 0, 1 ou 2, sous réserve que la somme de a + b + c soit inférieure ou égale à 3 et, dans au moins 50% des motifs de formule (I), la somme de a + b vaille 0 ou 1 et dans au moins 20% des motifs de formule générale (I) c vaille 1,
la teneur en groupes alcoxy R²O étant de 5-20% en poids.

2. Procédé pour la préparation de la résine d'alkylsilicone (A) selon la revendication 1, dans lequel, dans un procédé continu, du chlorosilane de formule générale (II),
R¹ₐR³_{c}SiCl_{(4-a-c)} (II),
de l'alcool de formule générale (III)
R²OH (III)
et de l'eau sont transformés dans une colonne réactive, dans laquelle l'alcool et l'eau sont ajoutés dans la partie inférieure de la colonne et y sont évaporés et l'alkylchlorosilane est injecté dans la partie supérieure de la colonne, où
R¹ peut être identique ou différent et signifie un radical hydrocarboné aliphatique monovalent, lié par SiC, non substitué ou substitué, comprenant au maximum 4 atomes de carbone,
R² peut être identique ou différent et signifie un radical hydrocarboné monovalent, non substitué ou substitué, comprenant au maximum 4 atomes de carbone,
R³ peut être identique ou différent et signifie un radical hydrocarboné monovalent, lié par SiC, non substitué ou substitué, comprenant au moins 5 atomes de carbone,
a vaut 0, 1, 2 ou 3 et
c vaut 0, 1 ou 2, sous réserve que dans au moins 20% des motifs de formule générale (I), c vaille 1.

3. Résine d'alkylsilicone (A) selon la revendication 1 ou procédé selon la revendication 2, dans laquelle/lequel le radical R² est choisi parmi un radical méthyle et un radical éthyle.

4. Résine d'alkylsilicone (A) selon la revendication 1 ou 3 ou procédé selon la revendication 2 ou 3, dans laquelle/lequel au moins 90% en mole de tous les radicaux R¹ signifient un radical méthyle.

5. Résine d'alkylsilicone (A) selon la revendication 1, 3 ou 4 ou procédé selon la revendication 2, 3 ou 4, qui présente, à chaque fois par rapport au nombre total de motifs de formule générale (I), 8 à 65% de motifs de formule générale (I) dans lesquels b représente la valeur 0.

6. Résine d'alkylsilicone (A) selon la revendication 1, 3, 4 ou 5 ou procédé selon la revendication 2, 3, 4 ou 5, qui présente, à chaque fois par rapport au nombre total de motifs de formule générale (I), 30 à 70% de motifs de formule générale (I) dans lesquels b représente la valeur 1.

7. Procédé d'hydrofugation de masses de ciment fibreux, dans lequel un mélange contenant de l'eau, des fibres, du ciment et de la résine d'alkylsilicone (A) selon la revendication 1, 3, 4, 5 ou 6 ou préparée selon le procédé selon la revendication 2, 3, 4, 5 ou 6, est préparé.

8. Utilisation de la résine d'alkylsilicone (A) selon la revendication 1, 3, 4, 5 ou 6 ou préparée selon la revendication 2, 3, 4, 5 ou 6 pour l'hydrofugation de masses de ciment fibreux.
